# EUROPÄISCHE PATENTSCHRIFT

(11) **EP 3 419 795 B1**
(45) Veröffentlichungstag und Bekanntmachung des Hinweises auf die Patenterteilung: **27.11.2019**
(21) Anmeldenummer: 17705105.9
(22) Anmeldetag: 14.02.2017
(51) Int. Cl.: B25J 19/00, F16D 41/12, F16D 65/18

(54) **ROBOTERGELENKSHALTEBREMSE UND ROBOTER MIT WENIGSTENS EINER SOLCHEN ROBOTERGELENKSHALTEBREMSE**
ROBOT JOINT HOLDING BRAKE AND ROBOT COMPRISING AT LEAST ONE SUCH ROBOT JOINT HOLDING BRAKE
FREIN DE MAINTIEN D'ARTICULATION DE ROBOT ET ROBOT ÉQUIPÉ D'AU MOINS UN TEL FREIN DE MAINTIEN D'ARTICULATION DE ROBOT

(30) Priorität: 23.02.2016 DE 102016202794
(43) Veröffentlichungstag der Anmeldung: 02.01.2019
(73) Patentinhaber: KUKA Deutschland GmbH, 86165 Augsburg (DE)
(72) Erfinder: RIEDEL, Martin, 86165 Augsburg (DE); RIESKAMP, Nenja, 48308 Senden (DE)
(74) Vertreter: Ege Lee & Partner Patentanwälte PartGmbB
(86) Internationale Anmeldenummer: PCT/EP2017/053216
(87) Internationale Veröffentlichungsnummer: WO 2017/144302

(56) Entgegenhaltungen:
- EP-A2- 1 507 191
- DE-A1- 19 750 420
- JP-A- 2011 251 057
- US-A1- 2002 043 950

## Beschreibung

Die Erfindung betrifft eine Robotergelenkshaltebremse, aufweisend ein Bremsengehäuse, eine im Bremsengehäuse schwenkbar gelagerte erste Sperrklinke mit einem ersten Kopfabschnitt, ein im Bremsengehäuse drehbar gelagertes Zahnrad mit gleichmäßig über den Umfang verteilt angeordneten Zähnen, von denen je zwei benachbarte Zähne jeweils eine Lücke des Zahnrads begrenzen, eine erste Spannvorrichtung, die ausgebildet ist, die erste Sperrklinke gegen das Zahnrad zu schwenken, derart, dass der erste Kopfabschnitt in einer jeweiligen zugeordneten Eingriffs-Drehlage des Zahnrads in eine der Lücken eintaucht, um die Robotergelenkshaltebremse zu arretieren, sowie einen ersten Magnet, der ausgebildet ist, während seiner Aktivierung die erste Sperrklinke entgegen der Wirkung der ersten Spannvorrichtung außerhalb der Lücken des Zahnrads zu halten, um die Robotergelenkshaltebremse in ihrem freigegebenen Zustand zu halten. Die Erfindung betrifft außerdem einen zugehörigen Roboter mit wenigstens einer solchen Robotergelenkshaltebremse.

Die DE 10 2005 014 710 A1 beschreibt eine Elektrobremse mit einer Eingriffsstruktur, die mit einem zugehörigen Bewegungsabschnitt in Eingriff bringbar ist, bei welcher der zugehörige Bewegungsabschnitt eine Sperrklinke aufweist, die in Verknüpfung mit der Rotation eines Motors rotiert, und die Eingriffsstruktur eine Eingriffsklaue umfasst, die an einem Umfang der Sperrklinke derart vorgesehen ist, um zu einem Eingriff mit einem Zahnabschnitt der Sperrklinke in der Lage zu sein.

Die DE 197 50 420 A1 beschreibt eine elektrisch betätigte Bremse, die zu ihrer Feststellung ein Klinkenrad aufweist, das mit einer Antriebswelle eines Elektromotors der Bremse drehfest verbunden ist. Über zwei symmetrisch zum Klinkenrad angeordnete Sperrklinken, die mittels eines Elektromagneten verschwenkbar sind, kann das Klinkenrad und damit die Bremse mechanisch festgestellt werden.

Die US 2002/0043950 A1 beschreibt eine Ratschenvorrichtung an einem modularen Robotersystem, das einen Vielzahl von Gliedern aufweist, die über modulare Gelenke verbunden sind. Die Ratschenvorrichtung weist ein Zahnrad auf, in dessen Zähne zwei gegenüberliegende Klinken in identischer Weise eingreifen, um das Zahnrad zu arretieren.

Die EP 1 507 191 A2 beschreibt eine Anschlageinrichtung zum Begrenzen einer Verlagerung eines Betätigungselements in einer vorbestimmten Betätigungsrichtung, wobei die Anschlageinrichtung einen Rastmechanismus aufweist, um eine Rasteinrichtung von einer Verzahnung zu trennen, und wobei die Trennung auf der Basis des Detektionssignals ausgeführt wird.

Aufgabe der Erfindung ist es, ein Robotergelenk bzw. einen Roboter zu schaffen, der eine konstruktiv einfach aufgebaute, aber dennoch sehr sichere Haltebremse aufweist.

Diese Aufgabe wird erfindungsgemäß gelöst durch eine Robotergelenkshaltebremse, aufweisend
- ein Bremsengehäuse,
- eine im Bremsengehäuse schwenkbar gelagerte erste Sperrklinke mit einem ersten Kopfabschnitt,
- ein im Bremsengehäuse drehbar gelagertes Zahnrad mit gleichmäßig über den Umfang verteilt angeordneten Zähnen, von denen je zwei benachbarte Zähne jeweils eine Lücke des Zahnrads begrenzen,
- eine erste Spannvorrichtung, die ausgebildet ist, die erste Sperrklinke gegen das Zahnrad zu schwenken, derart, dass der erste Kopfabschnitt in einer jeweiligen zugeordneten Eingriffs-Drehlage des Zahnrads in eine der Lücken eintaucht, um die Robotergelenkshaltebremse zu arretieren,
- sowie einen ersten Magnet, der ausgebildet ist, während seiner Aktivierung die erste Sperrklinke entgegen der Wirkung der ersten Spannvorrichtung außerhalb der Lücken des Zahnrads zu halten, um die Robotergelenkshaltebremse in ihrem freigegebenen Zustand zu halten,
des Weiteren aufweisend eine im Bremsengehäuse schwenkbar gelagerte zweite Sperrklinke mit einem zweiten Kopfabschnitt, und
eine zweite Spannvorrichtung, die ausgebildet ist, die zweite Sperrklinke gegen das Zahnrad zu schwenken, derart, dass der zweite Kopfabschnitt in einer jeweiligen zugeordneten Eingriffs-Drehlage des Zahnrads in eine der Lücken eintaucht, um die Robotergelenkshaltebremse zu arretieren,
wobei die erste Sperrklinke und die zweite Sperrklinke relativ zum Zahnrad derart schwenkbar im Bremsengehäuse gelagert sind, dass in einem arretierten Zustand der Robotergelenkshaltebremse nur die eine der beiden Sperrklinken mit ihrem Kopfabschnitt in die Lücke des Zahnrads eintaucht und der Kopfabschnitt der jeweils anderen Sperrklinke an einer Kopffläche eines Zahnes des Zahnrades ansteht.

Unter einer Robotergelenkshaltebremse ist zu verstehen, dass sie geeignet ist, ein Gelenk eines Roboters bzw. dessen Roboterarms, insbesondere ein Drehgelenk des Roboters in einer Arretierungsstellung zu halten und ein selbständiges, d.h. unbeabsichtigtes Weiterdrehen des Gelenks zu verhindern. Insbesondere soll mittels einer solchen Robotergelenkshaltebremse verhindert werden, dass sich das Gelenk ungewollt bewegt, beispielsweise aufgrund von Schwerkrafteinflüssen, die auf den Roboterarm wirken. Eine solche Robotergelenkshaltebremse soll auch in einem Betriebszustand, in dem sie nicht mit Energie, insbesondere elektrischer Energie versorgt ist, ihre Arretierungsfunktion erfüllen, d.h. das betreffende Gelenk festsetzen. Die Robotergelenkshaltebremse ist insbesondere nicht dazu ausgebildet, ein sich bewegendes Gelenk abbremsen zu können.

Das Bremsengehäuse kann geschlossen oder offen ausgebildet sein. Insbesondere kann das Bremsengehäuse ggf. auch schon allein durch ein streben- oder rahmenartiges Kopplungsglied gebildet werden, welches die drehbare Lagerung des Zahnrades und die schwenkbare Lagerung der beiden Sperrklinken in festen Achsabständen zueinander sicherstellt.

Das Zahnrad kann beispielsweise analog eines Wälzgetriebezahnrades ausgebildet sein. Alternativ kann das Zahnrad bzw. die Zahnscheibe auch andere Zahnformen bzw. Zacken aufweisen.

Es befindet sich immer nur entweder die erste Sperrklinke in sperrendem Eingriff mit dem Zahnrad, wobei die zweite Sperrklinke außer Eingriff ist, oder es befindet sich nur die zweite Sperrklinke in sperrendem Eingriff mit dem Zahnrad, wobei die erste Sperrklinke außer Eingriff ist. Es befinden sich somit niemals beide Sperrklinken (erste Sperrklinke und zweite Sperrklinke) gleichzeitig in sperrendem Eingriff mit dem Zahnrad. Indem die erste Sperrklinke und die zweite Sperrklinke relativ zum Zahnrad derart schwenkbar im Bremsengehäuse gelagert sind, dass in einem arretierten Zustand der Robotergelenkshaltebremse nur die eine der beiden Sperrklinken mit ihrem Kopfabschnitt in die Lücke des Zahnrads eintaucht und der Kopfabschnitt der jeweils anderen Sperrklinke an einer Kopffläche eines Zahnes des Zahnrades ansteht, wird die Robotergelenkshaltebremse in einer von zwei möglichen Drehrichtungen gesperrt, wobei aufgrund des fehlenden Eingriffs der zweiten Sperrklinke im Arretierungszustand der Robotergelenkshaltebremse, die Bremse bzw. das Zahnrad in die entgegen der Sperrrichtung laufende Drehrichtung bewegt werden kann. Im Arretierungszustand kann die Bremse nicht gelöst werden, ohne die Bremse bzw. das Zahnrad nicht vorher in die entgegen der Sperrrichtung laufende Drehrichtung bewegt zu haben. Dies stellt sicher, dass der Gelenksmotor desjenigen Gelenks des Roboters, das die Robotergelenkshaltebremse aufweist, welche sich gerade im Arretierungszustand befindet, zunächst funktionsfähig sein muss und fähig sein muss, das Gelenk bspw. entgegen der Schwerkraft oder entgegen einer Last des Roboters anheben bzw. entgegen der Last bewegen zu können, um die Robotergelenkshaltebremse freigeben zu können. Damit ist also sichergestellt, dass der Gelenksmotor alle anstehenden Drehmomentlasten zuverlässig selbst trägt, ohne dass es zu einer unerwünschten, z.B. absackenden Bewegung des Gelenkes kommen kann, und das bevor die Robotergelenkshaltebremse aktiv freigegeben werden kann. Die erfindungsgemäße Robotergelenkshaltebremse weist insoweit, je nachdem welche Sperrklinke im Eingriff mit dem Zahnrad steht, in die jeweilige andere Drehrichtung eine Freilauffunktion auf.

Die erste Sperrklinke und die zweite Sperrklinke können im Bremsengehäuse derart schwenkbar gelagert angeordnet sein, dass in einem arretierten Zustand der Robotergelenkshaltebremse die eine der beiden Sperrklinken mit ihrem Kopfabschnitt in die arretierende Lücke des Zahnrads eintaucht und der Kopfabschnitt der jeweils anderen Sperrklinke an der Kopffläche des der Lücke folgenden Zahnes ansteht.

Indem der Kopfabschnitt der jeweils anderen Sperrklinke an der Kopffläche des der Lücke folgenden Zahnes ansteht, ist sichergestellt, dass niemals beide Sperrklinken gleichzeitig in Eingriff sein können. Darüber hinaus ist bei einer solchen Ausgestaltung sichergestellt, dass bei einer entgegen der Sperrrichtung erfolgenden Drehung des Zahnrades, die erforderlich ist, um die Robotergelenkshaltebremse zu lösen bzw. freizugeben, auch die bisher im Eingriff befindliche Sperrklinke soweit aus ihrem Eingriff mit dem Zahnrad herausgedreht wird, dass der Kopfabschnitt dieser Sperrklinke bis zum Kopfkreisdurchmesser des Zahnrades herausgeschwenkt wird. Dies hat zur Folge, dass der bisher im Eingriff befindliche Sperrklinke so nahe an den Magneten herangebracht wird, dass der Magnet die Sperrklinke entgegen der Kraft der zugeordneten Spannvorrichtung in eine Freigabestellung bewegen und dort halten kann.

Der erste Kopfabschnitt der ersten Sperrklinke und der zweite Kopfabschnitt der zweiten Sperrklinke können jeweils eine Stirnfläche aufweisen, welche im arretierten Zustand der Robotergelenkshaltebremse an einer in die arretierte Drehrichtung weisenden Zahnflanke eines Zahnes des Zahnrades ansteht. Jede Sperrklinke kann dabei ein Schwenklager aufweisen, das an der Sperrklinke der Stirnfläche in Längserstreckung der Sperrklinke gegenüberliegend angeordnet ist. Das Schwenklager ist zum schwenkbaren Lagern der Sperrklinke an dem Bremsengehäuse ausgebildet. Mittels der Stirnfläche kann eine vom Zahnrad in die Sperrklinke eingeleitete Haltekraft besonders gut übertragen bzw. abgestützt werden.

Die erste Sperrklinke und die zweite Sperrklinke können im Bremsengehäuse derart schwenkbar gelagert angeordnet sein, dass in einem arretierten Zustand der Robotergelenkshaltebremse die eine der beiden Sperrklinken mit ihrer Stirnfläche an einer in die arretierte Drehrichtung weisenden Zahnflanke eines Zahnes des Zahnrades ansteht und der Kopfabschnitt der jeweils anderen Sperrklinke an der Kopffläche desselben Zahnes ansteht. Durch eine solche räumliche Nähe der beiden Kopfabschnitte der Sperrklinken können insbesondere beide Sperrklinken von demselben, insbesondere einzigen Magneten gehalten werden.

Der erste Magnet kann ausgebildet sein, während seiner Aktivierung sowohl die erste Sperrklinke entgegen der Wirkung der ersten Spannvorrichtung als auch die zweite Sperrklinke entgegen der Wirkung der zweiten Spannvorrichtung außerhalb der Lücken des Zahnrads zu halten, um die Robotergelenkshaltebremse in ihrem freigegebenen Zustand zu halten. Somit kann die Robotergelenkshaltebremse mit nur einem einzigen Magneten auskommen und benötigt keine separaten Magnete für die beiden Sperrklinken. Indem der erste Magnet ausgebildet ist, während seiner Aktivierung sowohl die erste Sperrklinke entgegen der Wirkung der ersten Spannvorrichtung als auch die zweite Sperrklinke entgegen der Wirkung der zweiten Spannvorrichtung außerhalb der Lücken des Zahnrads zu halten, kann sich die Robotergelenkshaltebremse aufgrund der beiden Spannvorrichtungen ausschließlich dann in einem freigebenden Zustand befinden, wenn der Magnet aktiviert ist. Im Falle eines Elektromagneten ist der Magnet nur dann aktiviert, wenn er mit elektrischer Energie versorgt ist. Fällt beispielweise die elektrische Energieversorgung des Roboters aus, dann wird auch der Magnet nicht mehr mit elektrischer Energie versorgt und die Robotergelenkshaltebremse fällt automatisch und ohne eine externe Energiequelle zu benötigen, in ihren sperrenden Zustand. Ist die Robotergelenkshaltebremse erst einmal in den sperrenden Zustand gefallen, dann kann die Robotergelenkshaltebremse erst wieder gelöst werden, wenn die elektrische Energieversorgung wieder vorhanden ist und der entsprechende Gelenkmotor des Roboterarms das Zahnrad der Robotergelenkshaltebremse aktiv entgegen der Sperrrichtung bewegen kann, um die sperrende Sperrklinke freizugeben.

Die Robotergelenkshaltebremse kann einen zweiten Magnet aufweisen, der ausgebildet ist, während seiner Aktivierung die zweite Sperrklinke entgegen der Wirkung der zweiten Spannvorrichtung außerhalb der Lücken des Zahnrads zu halten, um die Robotergelenkshaltebremse in ihrem freigegebenen Zustand zu halten.

Wenn die Robotergelenkshaltebremse für jede Sperrklinke einen separaten Magnet aufweist, ist es nicht notwendig, dass die Sperrklinken bzw. deren Kopfabschnitte sehr nahe beieinander angeordnet sind. Die Sperrklinken können dann an beliebigen Positionen in weiteren Abständen voneinander entfernt am Umfang des Zahnrades angeordnet werden.

Der erste Magnet und/oder der zweite Magnet können als ein elektrisch aktivierbarer Elektromagnet ausgebildet sein. Im einfachsten Falle kann der Magnet eine elektrische Spule mit einem Eisenkern aufweisen, so dass durch eine Versorgung der Spule mit elektrischer Energie der Eisenkern magnetisiert werden kann.

Der erste Magnet und/oder der zweite Magnet können aber beispielsweise auch als ein mechanisch oder elektromechanisch positionsverstellbar gelagerter Permanentmagnet ausgebildet sein und der erste Magnet bzw. der zweite Magnet können dabei durch sein Positionsverstellen aktivierbar sein, um die erste Sperrklinke bzw. die zweite Sperrklinke entgegen der Wirkung der ersten Spannvorrichtung bzw. der zweiten Spannvorrichtung aus den Lücken des Zahnrads herauszuhalten.

Der erste Magnet bzw. der zweite Magnet kann hinsichtlich seiner magnetischen Wirkung derart begrenzt ausgelegt sein und/oder die erste Sperrklinke bzw. die zweite Sperrklinke können derart entfernt vom ersten Magnet bzw. vom zweiten Magnet angeordnet sein, dass in der jeweiligen Arretierungsstellung der ersten Sperrklinke bzw. der zweiten Sperrklinke, in welcher Arretierungsstellung die jeweilige Sperrklinke mit ihrem Kopfabschnitt in eine Lücke des Zahnrads eintaucht, die magnetische Wirkung des aktivierten ersten Magnet bzw. des aktivierten zweiten Magnet nicht ausreicht, die betreffende Sperrklinke entgegen der Wirkung der zugeordneten Spannvorrichtung aus der Lücke des Zahnrads herauszubewegen, um die Robotergelenkshaltebremse freizugeben.

Dabei zieht der Magnet nur diejenige Sperrklinke an, die auf der Kopffläche des betreffenden Zahnes des Zahnrads aufliegt. Die im Eingriff befindliche Sperrklinke wird hingegen vom Magneten aufgrund des größeren Abstands und ggf. zusätzlich aufgrund des verspannten Zustands nicht beeinflusst, d.h. nicht aus dem Eingriff mit dem Zahnrad hinausbewegt. Dies bedeutet, dass in dieser Anordnung der Sperrklinke der Magnet die Sperrklinke nicht von alleine aus dem Eingriff herausziehen kann, sondern dazu eine Drehbewegung des Zahnrads erforderlich ist. Es muss also ein entgegengesetztes Drehen des Antriebs bzw. des Zahnrades entgegen der Sperrrichtung erfolgen, um die Sperrklinke freizugeben und durch den Magneten lösen zu können. Das gebremste Robotergelenk muss sich also erst gegen die Sperrrichtung, d.h. gegen die Lastrichtung bewegen, wodurch die im Eingriff befindliche Sperrklinke aus der Zahnlücke herausgeschoben und in die Nähe des Magneten bewegt wird, so dass dieser Magnet nun erst die Sperrklinke magnetisch anziehen kann.

Der erste Magnet bzw. der zweite Magnet kann hinsichtlich seiner magnetischen Wirkung derart stark ausgelegt sein, dass die jeweils zugeordnete erste Sperrklinke bzw. zweite Sperrklinke in ihrer auf einer Kopffläche eines Zahnes des Zahnrads aufliegenden Stellung bei Aktivierung des zugeordneten ersten Magnets bzw. zweiten Magnets entgegen der Wirkung der ersten Spannvorrichtung bzw. der zweiten Spannvorrichtung au-ßerhalb der Lücken des Zahnrads gehalten wird. Dies bedeutet, dass der erste Magnet hinsichtlich seiner magnetischen Wirkung derart stark ausgelegt sein sollte, dass die zugeordnete erste Sperrklinke in ihrer auf einer Kopffläche eines Zahnes des Zahnrads aufliegenden Stellung bei Aktivierung des ersten Magnets entgegen der Wirkung der ersten Spannvorrichtung au-ßerhalb der Lücken des Zahnrads gehalten wird. Dies bedeutet, dass der zweite Magnet hinsichtlich seiner magnetischen Wirkung derart stark ausgelegt sein sollte, dass die zugeordnete zweite Sperrklinke in ihrer auf einer Kopffläche eines Zahnes des Zahnrads aufliegenden Stellung bei Aktivierung des zweiten Magnets entgegen der Wirkung der zweiten Spannvorrichtung außerhalb der Lücken des Zahnrads gehalten wird.

Die Robotergelenkshaltebremse kann demgemäß eine Haltebremsensteuerung aufweisen, die ausgebildet und eingerichtet ist, vor einem Aktivieren des ersten Magneten bzw. des zweiten Magneten, um die betreffend zugeordnete Sperrklinke entgegen der Wirkung der jeweiligen Spannvorrichtung aus der Lücke des Zahnrads herauszubewegen, damit die Robotergelenkshaltebremse freigeben wird, zunächst das Zahnrad entgegen seiner momentanen Sperrrichtung zu drehen, um die betreffende arretierende Sperrklinke zu entlasten und freizugeben. Dadurch kann vorgesehen sein, dass die momentan sperrende Sperrklinke zunächst von einer Belastung durch einen an der Sperrklinke anstehenden Zahn des Zahnrades befreit wird, so dass keine Kraft und kein Moment mehr über den Zahn des Zahnrades in die Sperrklinke eingeleitet wird, wodurch die Sperrklinke freigegeben ist, um bei einer anschließenden Aktivierung des zugeordneten Magneten mit geringerer Kraft durch den Magneten bewegt zu werden und/oder durch die Drehbewegung eines Zahnes des Zahnrades die Sperrklinke aktiv nach außen gedrückt zu werden. Bei einem Roboter der mit einer entsprechenden Robotergelenkshaltebremse ausgestattet ist, kann dies bedeuten, dass zunächst eine von dem Roboter getragen Last mittels seiner Antriebe antriebsgeregelt aufgenommen, insbesondere angehoben werden muss, um das mittels der Robotergelenkshaltebremse arretierte Gelenk lösen zu können. Dies erhöht die Betriebssicherheit des Roboters, da ein Lösen der Robotergelenkshaltebremse erst dann möglich ist, wenn sichergestellt ist, dass die Antriebe des Roboters die Last selbst tragen. So ist es ausgeschlossen, dass ein Gelenk infolge des Lösens der Robotergelenkshaltebremse unerwartet durchsacken könnte.

Die Aufgabe wird außerdem gelöst durch einen Roboter, aufweisend eine Robotersteuerung und einen Roboterarm mit mehreren durch Glieder verbundenen Gelenken, die von Motoren des Roboters, welche an die Gelenke angekoppelt sind, gemäß eines von der Robotersteuerung ausgeführten Roboterprogramms automatisiert oder in einem Handfahrbetrieb des Roboters antriebsgesteuert verstellbar sind, um die Konfiguration des Roboterarms zu verändern, wobei wenigstens ein Gelenk des Roboterarms eine Robotergelenkshaltebremse gemäß einem der beschrieben Ausführungsformen.

Roboter, insbesondere Industrieroboter sind Arbeitsmaschinen, die zur automatischen Handhabung und/oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind. Roboter weisen üblicherweise einen Roboterarm mit mehreren durch insbesondere elektrische Antriebe bzw. Motoren automatisch oder manuell verstellbare Gelenke (Achsen) und eine programmierbare Robotersteuerung auf, die während des Betriebs die Bewegungsabläufe des Roboters steuert bzw. regelt.

Jedes der Gelenke kann als ein Drehgelenk ausgebildet sein. Jedes Glied ist ausgebildet, Kräfte und Momente, welche insbesondere von einem Greifer oder Werkzeug, das durch den Roboter gehandhabt, insbesondere bewegt wird, über einen Werkzeugbefestigungsflansch des Roboterarms in den Roboterarm, d.h. in seine Struktur eingeleitet wird, von einem Gelenk an ein folgendes Gelenk weiterzuleiten. Daneben müssen auch Kräfte und Momente, welche von der Eigengewichtskraft des Roboterarms stammen, in das Grundgestell des Roboterarms weitergeleitet werden. Jedes Glied des Roboterarms weist dazu mindestens ein Strukturteil auf, das ausgebildet ist, diese Kräfte und Momente aufnehmen und weiterleiten zu können. Im Allgemeinen ist ein solches Strukturteil hohl ausgebildet und kann beispielsweise von einem Metallgussteil oder einer geschweißten Stahlkonstruktion bestehen, welche beispielsweise Rohrabschnitte aufweisen kann. Jedes Glied ist über eines der Gelenke mit einem unmittelbar folgenden Glied des Roboterarms verbunden, insbesondere drehbar verbunden. Dazu kann das jeweilige Gelenk ein Drehlager aufweisen. An jedes Gelenk bzw. jedes Drehlager kann ein eigener Motor, wie beispielsweise ein Elektromotor, insbesondere ein Servomotor, mit zughöriger Antriebssteuerung automatisch antreibbar angekoppelt sein. Die Antriebe bzw. die Motoren werden im Allgemeinen von einer Robotersteuerung des Roboters angesteuert. Durch die Robotersteuerung können die Gelenke mittels der Antriebe bzw. der Motoren gemäß eines Roboterprogramms automatisiert oder in einem Handfahrbetrieb des Roboters antriebsgesteuert verstellt werden, um die Konfiguration des Roboterarms zu verändern. Unter einer Konfiguration wird die Menge der momentanen, einzelnen Achswinkelstellungen der Gelenke des Roboterarms verstanden.

Die erfindungsgemäße Robotergelenkshaltebremse kann demgemäß eine formschlüssig wirkende Haltebremse für beide Drehrichtungen umfassen, mit einer Zahnscheibe, d.h. einem Zahnrad, zwei dazu in radialer Richtung gelagerten Sperrklinken und einem bzw. zwei Magneten, insbesondere Elektromagneten, wie bspw. Topfmagneten. Die Zahnscheibe kann auf einer zu bremsenden Welle, vorzugsweise auf einer Motorwelle des Antriebs des Robotergelenks befestigt und gegen Verdrehen darauf gesichert sein.

Die beiden gegensinnig angeordneten Sperrklinken können dabei drehbar im Gehäuse oder an einer relativ zur drehenden Zahnscheibe starren Struktur, wie beispielsweise einem bewegten Roboterglied, gelagert sein. Die beiden gegensinnig angeordneten Sperrklinken können von Federelementen selbsttätig gegen die Zahnscheibe gezogen werden. Ein kompakter Elektromagnet hat dabei gerade so viel Leistung, dass er die beiden Sperrklinken gleichzeitig gegen deren rückstellende Federkräfte so halten kann, dass diese nicht in Kontakt mit der Zahnscheibe kommen. Der Werkstoff der Sperrklinken ist beliebig, aufgrund der eindimensionalen Hauptbelastung in Druckrichtung können bspw. kostengünstige Kunststoffausführungen verwendet werden. Allerdings benötigen diese dann im Kontaktbereich zu den Elektromagneten eine metallische Kontaktfläche, die beispielsweise durch kleine eisenhaltige Metallsteifen realisiert werden können, welche z.B. aufgeklebt oder eingegossen werden. Ausführungen der Sperrklinken als einfache gestanzte oder mittels Laser geschnittene Bauteile aus Stahl sind ebenso möglich.

Durch ein Abschalten des Elektromagneten wird die Anziehungskraft aufgehoben und die Sperrklinken werden von den Federn an die Zahnscheibe gezogen. Dabei kommt es immer zum formschlüssigen Eingriff eines einzigen der beiden Sperrklinken, nie aber zum formschlüssigen Eingriff beider Sperrklinken gleichzeitig. Genauer gesagt berührt die eine Sperrklinke mit ihrer Seitenfläche den Zahnkopf, während die andere Sperrklinke mit ihrer Stirnseite, d.h. ihrem Kopfabschnitt auf der Zahnflanke anliegt und die Sperrwirkung in die entsprechende Richtung erzeugt. Die Gegenrichtung ist soweit frei drehbar bis die eine Sperrklinke in den Eingriff kommt. Dabei wird die andere Sperrklinke vom Zahn wieder aus dem Eingriff herausgeschoben. Der sich daraus ergebende Verdrehwinkel zwischen den beiden Sperrklinkeneingriffen kann durch die Geometrie der Kontaktpartner vorgegeben werden und ist mit wenigen Winkelgrad sehr gering. Die Übersetzung eines ggf. nachgeschalteten Getriebes kann diesen Winkel nochmals reduzieren. Aufgrund der geringen bremsseitigen Verdrehung, sowie der sehr direkten Kraftleitung von Zahnscheibe über Sperrklinke zum Lagerbolzen, und der günstigen Belastungsart eines Druckes, ist keine hohe Getriebeübersetzung notwendig, da auch hohe Bremslasten sicher, selbst von einer kompakt ausgeführten Einheit, aufgenommen werden können und das Spiel abtriebsseitig minimal ist.

Zum Lösen der Bremse wird der Elektromagnet wieder mit elektrischer Energie versorgt. Dabei zieht dieser nur diejenige Sperrklinke an, die gerade auf dem Zahnkopf liegt. Die im Eingriff befindliche Klinke wird vom Elektromagneten auf Grund des größeren Abstands und des verspannten Zustands nicht beeinflusst, d.h. nicht aus dem Eingriff mit der Zahnscheibe bzw. dem Zahnrad hinausbewegt. Das gebremste Robotergelenk muss sich also erst gegen die Sperrrichtung, d.h. gegen die Lastrichtung, bewegen, wodurch die zweite Sperrklinke aus der Zahnscheibe erst herausgeschoben und in die Nähe des Elektromagneten bewegt wird, so dass diese nun magnetisch angezogen werden kann. Der durch den Sperrklinkenwechsel bedingte minimale Verdrehwinkel bei aktivem Bremszustand ist somit eine notwendige Eigenschaft der Bremse, um diese wieder lösen zu können. Wären beide Sperrklinken fehlerbedingt gleichzeitig im Eingriff kann keine Lösebewegung durchgeführt werden, so dass die Bremse nicht automatisch entriegelt, d.h. freigegeben werden kann.

Die Eigenschaften der erfindungsgemäßen Robotergelenkshaltebremse, insbesondere hinsichtlich einer geringen Baugröße und einer hohen Leistungsfähigkeit der Bremse, basieren insbesondere auf dem formschlüssig wirkenden Bremsprinzip, welches bis zum Bauteilversagen die zu bremsende Welle zu halten vermag, dem günstigen Kraftfluss entlang der Sperrklinken auf die kompakten Drehlager, der kleinen Ausführung des Elektromagnetes, welcher nur wenig Kraft benötigt, da er die Sperrklinken nur gegen eine schwache Federkraft halten muss bzw. aus nächster Nähe anzieht, sie nicht aber aus der Sperrposition zurückziehen muss.

Sollte die beschriebene Bremse auch als dynamische Bremse im Notfall eingesetzt werden können oder soll das entsprechende Roboterglied auch bei eingefallener Bremse ab einer definiert vorgegebenen äußeren Kraft per Hand manuell verschiebbar sein, z.B. wenn permanente passive Rücktreibbarkeit auch im stromlosen Zustand gewünscht ist, dann kann dies durch definiert durchrutschende Elemente im Antriebsstrang oder im Bremsstrang erfolgen.

In einer erweiterten Variante des hier vorstellten Bremsaufbaus können auch zwei Elektromagnete eingesetzt werden. Dabei wird jede der beiden Sperrklinken von einem eigenen Elektromagneten angezogen bzw. gehalten. Durch eine gezielte einzelne Ansteuerung der Elektromagneten können gezielt Richtungen gebremst und andere Richtungen freigegeben werden. So kann die Bremse als ein aktiv steuerbarer Freilauf, beispielsweise bei gravitationsbelasteten Achsen, verwendet werden, die manuell durch den Benutzer raufgeschoben werden können, aber nicht runterfallen können.

Zusammenfassend kann die erfindungsgemäße Robotergelenkshaltebremse einen kompakten Aufbau ermöglichen und somit eine leistungsfähige Bremseinheit bilden, die eine aktive Motorbewegung gegen die Last und damit gegen die Bremsrichtung erfordert, um diese wieder lösen zu können. Ein unabsichtliches Lösen durch einfaches Einschalten der Elektromagneten ist dabei aus Sicherheitsgründen nicht ausreichend, um die Haltebremse lösen zu können. Der geringe Bauraum der Bremse besitzt hauptsächlich eine radiale Ausprägung in Bezug auf die zu bremsende Welle und nimmt wenig axialen Raum ein.

Die erfindungsgemäße Robotergelenkshaltebremse ermöglicht, je nach Ausführungsform, eine besonders kompakte und/oder kostengünstige Einheit, die Halte- und Notbremsfunktionalität besitzt, die erst nach Sicherstellung der Funktionsfähigkeit des Antriebsstranges wieder gelöst werden kann. Ein Entsperren der Bremse soll erst bei vollständig angeschalteten Motoren erfolgen können. Dabei sollen beide Richtungen formschlüssig und nur mit minimalem Verdrehspiel blockierbar sein. Im geöffneten Zustand entstehen keine Verluste z.B. durch Reibung bei der Relativbewegung zweier Körper.

Der durch den mechanischen Aufbau sehr direkte Kraftfluss ermöglicht die sichere Aufnahme selbst hoher Haltekräfte. Durch Variationen im Aufbau sind zudem Brems- und Freilauffunktionen mit freier Richtungswahl kombinierbar, z.B. eine Richtung wird bei Schaltsignal stets energielos gebremst, während das System in der anderen Richtung frei verschiebbar bzw. verfahrbar ist.

Die Sicherheitsfunktion kann vorsehen, dass zum automatischen Lösen der Bremen ein einfaches Einschalten der Magnete nicht ausreichend ist. Darüber hinaus wird eine definierte Motorbewegung benötigt, die entgegen der momentan anliegenden Belastung gerichtet ist. Diese Bewegung stellt somit sicher, dass der Motor in der Lage ist, die aktuelle Last eigenständig bewegen zu können, nämlich entgegen der momentan anliegenden Belastung.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines beispielhaften Roboters mit einem Roboterarm und einer Robotersteuerung in der Bauart eines SCARA-Roboters;
- Fig. 2: eine schematische Darstellung einer erfindungsgemäßen Robotergelenkshaltebremse in ihrem freigegebenen Zustand;
- Fig. 3: eine schematische Darstellung der Robotergelenkshaltebremse gemäß Fig. 2 in einem entgegen dem Uhrzeigesinn arretierten Zustand;
- Fig. 4: eine schematische Darstellung der Robotergelenkshaltebremse gemäß Fig. 2 in einem im Uhrzeigesinn arretierten Zustand;
- Fig. 5: eine schematische Darstellung der Robotergelenkshaltebremse gemäß Fig. 2 im arretierten Zustand gemäß 3;
- Fig. 6: eine schematische Darstellung der Robotergelenkshaltebremse gemäß Fig. 2, bei der das Zahnrad zum Lösen der Robotergelenkshaltebremse entgegen der Sperrrichtung bewegt wird, so dass die in Eingriff stehende Sperrklinke in Richtung des Magneten bewegt wird;
- Fig. 7: eine schematische Darstellung der Robotergelenkshaltebremse gemäß Fig. 2, bei der die bisher sperrende Sperrklinke auf dem Zahnkopf eines Zahnes des Zahnrades zu liegen kommt, wodurch die Sperrklinke in den magnetischen Einflussbereich des Magneten gerät;
- Fig. 8: eine schematische Darstellung der Robotergelenkshaltebremse gemäß Fig. 2, bei der die bisher sperrende Sperrklinke an den Magneten herangezogen ist;
- Fig. 9: eine schematische Darstellung einer zweiten Ausführungsvariante einer Robotergelenkshaltebremse mit zwei separaten Magneten für jeweils eine Sperrklinke;
- Fig. 10: eine schematische Darstellung einer dritten Ausführungsvariante einer Robotergelenkshaltebremse mit zwei separaten Magneten für jeweils eine Sperrklinke, wobei die beiden Sperrklinken nicht nebeneinander, sondern gegenüberliegend des Zahnrades angeordnet sind; und
- Fig. 11: eine perspektivische Schnittansicht eines beispielhaften Robotergelenks mit einer erfindungsgemäßen Robotergelenkshaltebremse.

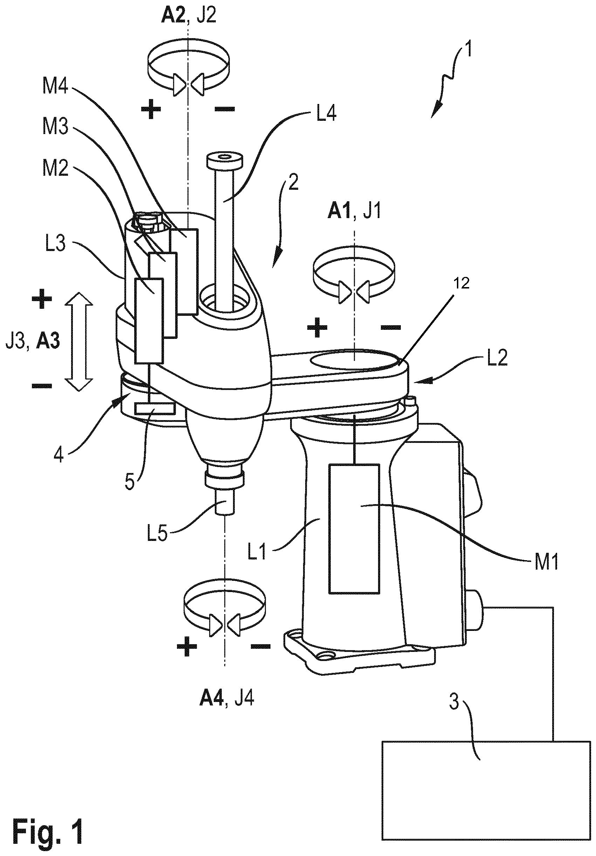

Die Fig. 1 zeigt einen Roboter 1 in einer beispielhaften Ausführung als ein so genannter SCARA-Roboter, der einen Roboterarm 2 und eine Robotersteuerung 3 aufweist. Der Roboterarm 2 umfasst im Falle des vorliegenden Ausführungsbeispiels fünf, nacheinander angeordnete und mittels Gelenke J1-J4 gegeneinander verstellbare Glieder L1-L5. Im Falle des in Fig. 1 gezeigten Ausführungsbeispiels ist das Glied L5 als ein Werkzeugflansch ausgebildet, zum Befestigen beispielsweise eines Werkzeugs oder eines Robotergreifers. Jedes Gelenke J1-J4 bildet eine Achse A1-A4 des Roboters 1.

Der Roboterarm 2 weist Motoren M1-M4 auf, welche jeweils an eines der Gelenke J1-J4 angekoppelt sind, und die gemäß eines von der Robotersteuerung 3 ausgeführten Roboterprogramms automatisiert oder in einem Handfahrbetrieb des Roboters 1 antriebsgesteuert durch die Motoren M1-M4 verstellbar sind, um die Konfiguration des Roboterarms 2 zu verändern. Im Falle des vorliegenden Ausführungsbeispiels der Fig.1 kann beispielsweise das Robotergelenk 4 mit einer erfindungsgemäßen Robotergelenkhaltebremse 5 ausgebildet sein.

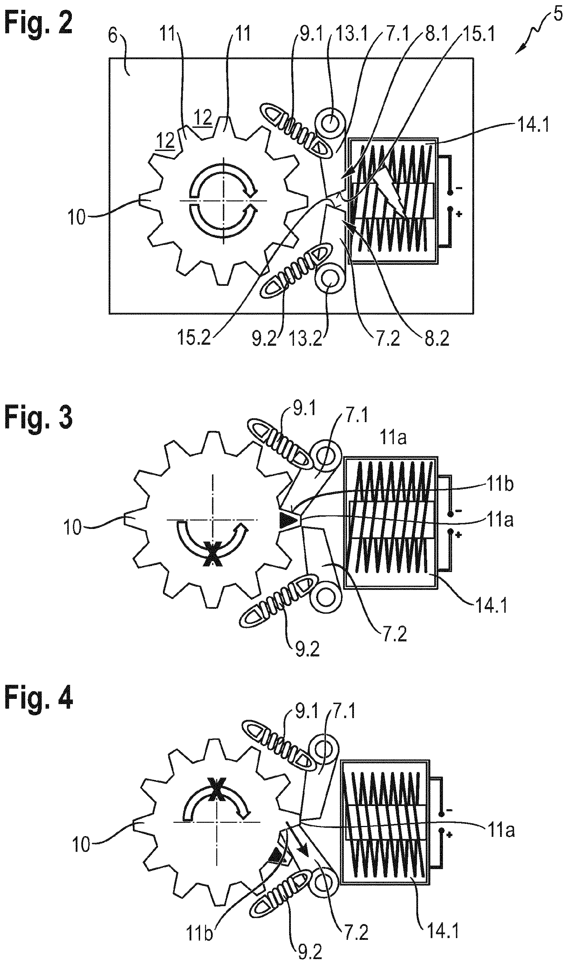

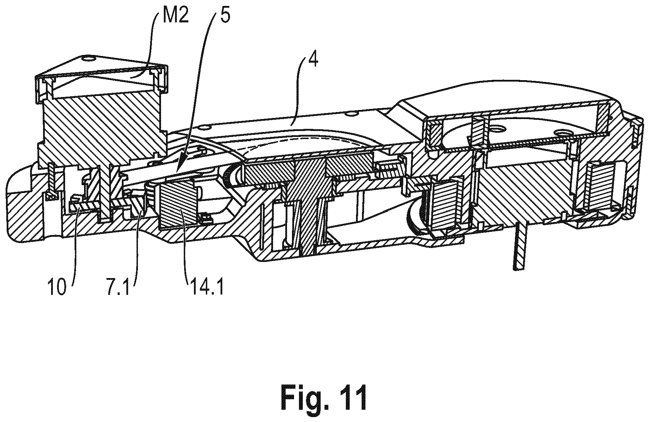

In Fig. 2 bis Fig. 10 sind verschiedene Ausführungsformen des prinzipiellen Aufbaus von erfindungsgemäßen Robotergelenkhaltebremsen 5 schematisch gezeigt und in Fig. 11 ist ein beispielhaftes Robotergelenk 4 in Alleinstellung gezeigt, welches eine erfindungsgemäße Robotergelenkhaltebremse 5 aufweist.

Generell weist die Robotergelenkshaltebremse 5 ein Bremsengehäuse 6, eine im Bremsengehäuse 6 schwenkbar gelagerte erste Sperrklinke 7.1 mit einem ersten Kopfabschnitt 8.1 und eine im Bremsengehäuse 6 schwenkbar gelagerte zweite Sperrklinke 7.2 mit einem zweiten Kopfabschnitt 8.2 auf. Die erste Sperrklinke 7.1 ist mittels eines ersten Schwenklagers 13.1 drehbar gelagert und die zweite Sperrklinke 7.2 ist mittels eines zweiten Schwenklagers 13.2 drehbar gelagert.

Im Bremsengehäuse 6 ist außerdem ein Zahnrad 10 drehbar gelagert. Das Zahnrad 10 weist gleichmäßig über den Umfang verteilt angeordnete Zähne 11 auf, von denen je zwei benachbarte Zähne 11 jeweils eine Lücke 12 des Zahnrads 10 begrenzen.

Eine erste Spannvorrichtung 9.1 ist ausgebildet, die erste Sperrklinke 7.1 gegen das Zahnrad 10 zu schwenken, derart, dass der erste Kopfabschnitt 8.1 in einer jeweiligen zugeordneten Eingriffs-Drehlage, wie in Fig. 3 gezeigt, des Zahnrads 10 in eine der Lücken 12 eintaucht, um die Robotergelenkshaltebremse 5 zu arretieren.

Eine zweite Spannvorrichtung 9.2 ist ausgebildet, die zweite Sperrklinke 7.2 gegen das Zahnrad 10 zu schwenken, derart, dass der zweite Kopfabschnitt 8.2 in einer jeweiligen zugeordneten Eingriffs-Drehlage, wie in Fig. 4 gezeigt, des Zahnrads 10 in eine der Lücken 12 eintaucht, um die Robotergelenkshaltebremse 5 zu arretieren.

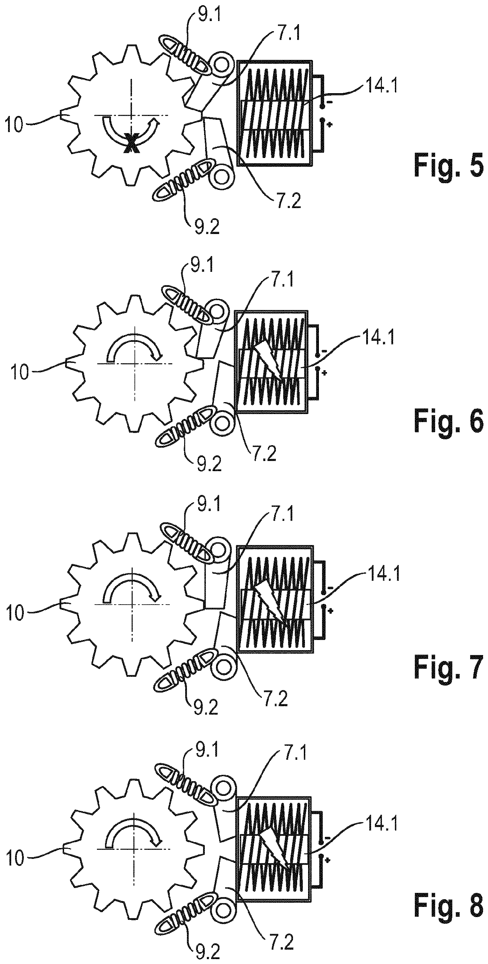

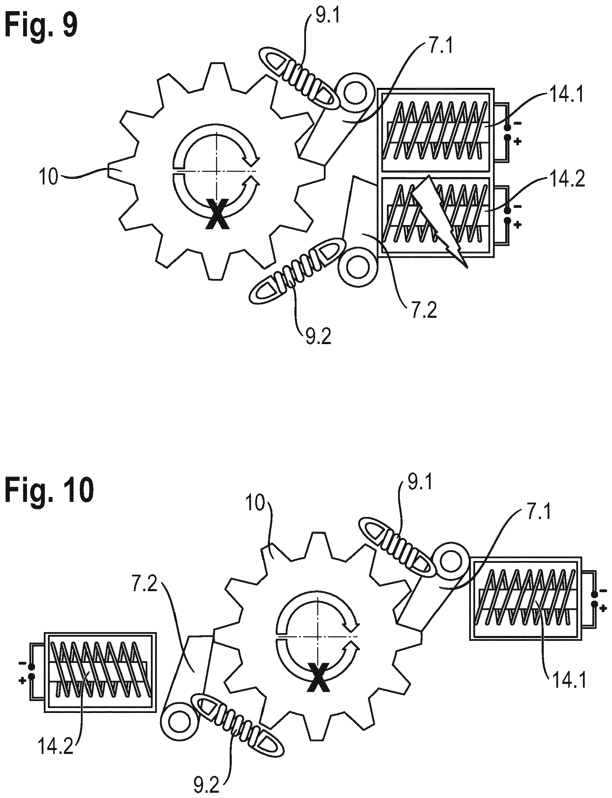

Die Robotergelenkshaltebremse 5 weist einen ersten Magnet 14.1 auf, der ausgebildet ist, während seiner Aktivierung die erste Sperrklinke 7.1 entgegen der Wirkung der ersten Spannvorrichtung 9.1 außerhalb der Lücken 12 des Zahnrads 10 zu halten, um die Robotergelenkshaltebremse 5 in ihrem freigegebenen Zustand zu halten, wie dies in Fig. 2 und Fig. 8 gezeigt ist. Im Falle der Ausführungsform der Fig. 2 bis Fig. 8 ist der erste Magnet 14.1 außerdem ausgebildet, während seiner Aktivierung auch die zweite Sperrklinke 7.2 entgegen der Wirkung der zweiten Spannvorrichtung 9.2 außerhalb der Lücken 12 des Zahnrads 10 zu halten, um die Robotergelenkshaltebremse 5 in ihrem freigegebenen Zustand zu halten. Im Falle der abgewandelten Ausführungsformen gemäß Fig. 9 und Fig. 10 weist die Robotergelenkshaltebremse 5 einen separaten zweiten Magnet 14.2 auf, der ausgebildet ist, während seiner Aktivierung die zweite Sperrklinke 7.2 entgegen der Wirkung der zweiten Spannvorrichtung 9.2 außerhalb der Lücken 12 des Zahnrads 10 zu halten, um die Robotergelenkshaltebremse 5 in ihrem freigegebenen Zustand zu halten.

Die im Bremsengehäuse 6 schwenkbar gelagerte zweite Sperrklinke 7.2 weist also den zweiten Kopfabschnitt 8.2 und die zweite Spannvorrichtung 9.2 auf, die ausgebildet ist, die zweite Sperrklinke 7.2 gegen das Zahnrad 10 zu schwenken, derart, dass der zweite Kopfabschnitt 8.2 in einer jeweiligen zugeordneten Eingriffs-Drehlage (Fig.4) des Zahnrads 10 in eine der Lücken 12 eintaucht, um die Robotergelenkshaltebremse 5 zu arretieren.

Die erste Sperrklinke 7.1 und die zweite Sperrklinke 7.2 sind dabei relativ zum Zahnrad 10 derart schwenkbar im Bremsengehäuse 6 gelagert, dass in einem arretierten Zustand der Robotergelenkshaltebremse 5, wie insbesondere durch die Fig. 3 und Fig. 4 illustriert, nur die ein der beiden Sperrklinken 7.1, 7.2 mit ihrem jeweiligen Kopfabschnitt 8.1, 8.2 in die Lücke 12 des Zahnrads 10 eintaucht und der Kopfabschnitt 8.1, 8.2 der jeweils anderen Sperrklinke 7.1, 7.2 an einer Kopffläche 11a eines Zahnes 11 des Zahnrades 10 ansteht. Im Falle der Bremssituation gemäß Fig. 3, in welcher ein Lauf entgegen dem Uhrzeigersinn gesperrt ist, taucht nur die erste Sperrklinke 7.1 mit ihrem ersten Kopfabschnitt 8.1 in die Lücke 12 des Zahnrads 10 ein und der zweite Kopfabschnitt 8.2 der zweiten Sperrklinke 7.2 steht an der Kopffläche 11a eines Zahnes 11 des Zahnrades 10 an. Im Falle der Bremssituation gemäß Fig. 4, in welcher ein Lauf im Uhrzeigersinn gesperrt ist, taucht nur die zweite Sperrklinke 7.2 mit ihrem zweiten Kopfabschnitt 8.2 in die Lücke 12 des Zahnrads 10 ein und der erste Kopfabschnitt 8.1 der ersten Sperrklinke 7.1 steht an der Kopffläche 11a des Zahnes 11 des Zahnrades 10 an.

Im Falle der Ausführungsformen gemäß Fig. 2 bis Fig. 9 sind die erste Sperrklinke 7.1 und die zweite Sperrklinke 7.2 im Bremsengehäuse 6 derart schwenkbar gelagert angeordnet, dass in einem arretierten Zustand (Fig.3 bis Fig. 5) der Robotergelenkshaltebremse 5, die eine der beiden Sperrklinken 7.1, 7.2 mit ihrem Kopfabschnitt 8.1, 8.2 in die arretierende Lücke 12 des Zahnrads 10 eintaucht und der Kopfabschnitt 8.1, 8.2 der jeweils anderen Sperrklinke 7.1, 7.2 an der Kopffläche 11a des der Lücke 12 folgenden Zahnes 11 ansteht.

Der erste Kopfabschnitt 8.1 der ersten Sperrklinke 7.1 und der zweite Kopfabschnitt 8.2 der zweiten Sperrklinke 7.2 weisen jeweils eine Stirnfläche 15.1, 15.2 auf, welche im arretierten Zustand der Robotergelenkshaltebremse 5 an einer in die arretierte Drehrichtung weisenden Zahnflanke 11b eines Zahnes 11 des Zahnrades 10 ansteht.

Im Falle der Ausführungsformen gemäß Fig. 2 bis Fig. 9 sind die erste Sperrklinke 7.1 und die zweite Sperrklinke 7.2 im Bremsengehäuse 6 derart schwenkbar gelagert angeordnet, dass in einem arretierten Zustand (Fig. 3 bis Fig. 5) der Robotergelenkshaltebremse 5 die eine der beiden Sperrklinken 7.1, 7.2 mit ihrer Stirnfläche 15.1, 15.2 an einer in die arretierte Drehrichtung weisenden Zahnflanke 11b eines Zahnes 11 des Zahnrades 10 ansteht und der Kopfabschnitt 8.1, 8.2 der jeweils anderen Sperrklinke 7.1 7.2 an der Kopffläche 11a desselben Zahnes 11 ansteht. Im Falle der Bremssituation gemäß Fig. 3, in welcher ein Lauf entgegen dem Uhrzeigersinn gesperrt ist, steht die erste Sperrklinke 7.1 mit ihrer Stirnfläche 15.1 an der in die arretierte Drehrichtung weisenden Zahnflanke 11b des Zahnes 11 des Zahnrades 10 an und der zweite Kopfabschnitt 8.2 der zweiten Sperrklinke 7.2 steht an der Kopffläche 11a desselben Zahnes 11 an. Im Falle der Bremssituation gemäß Fig. 4, in welcher ein Lauf im Uhrzeigersinn gesperrt ist, steht die zweite Sperrklinke 7.2 mit ihrer Stirnfläche 15.2 an der in die arretierte Drehrichtung weisenden Zahnflanke 11b des Zahnes 11 des Zahnrades 10 an und der erste Kopfabschnitt 8.1 der ersten Sperrklinke 7.1 steht an der Kopffläche 11a desselben Zahnes 11 an.

Im Falle der Ausführungsform gemäß Fig. 2 bis Fig. 8 ist der erste Magnet 14.1 ausgebildet, während seiner Aktivierung sowohl die erste Sperrklinke 7.1 entgegen der Wirkung der ersten Spannvorrichtung 9.1 als auch die zweite Sperrklinke 7.2 entgegen der Wirkung der zweiten Spannvorrichtung 9.2 außerhalb der Lücken 12 des Zahnrads 10 zu halten, um die Robotergelenkshaltebremse 5, wie in Fig. 2 und Fig. 8 gezeigt, in ihrem freigegebenen Zustand zu halten.

Im Falle der Ausführungsformen gemäß Fig. 9 und Fig. 10 weist die Robotergelenkshaltebremse 5 neben dem ersten Magnet 14.1 zusätzlich einen zweiten Magnet 14.2 auf, der ausgebildet ist, während seiner Aktivierung die zweite Sperrklinke 7.2 entgegen der Wirkung der zweiten Spannvorrichtung 9.2 außerhalb der Lücken 12 des Zahnrads 10 zu halten, um die Robotergelenkshaltebremse 5 in ihrem freigegebenen Zustand zu halten.

Sowohl der erste Magnet 14.1 als auch der zweite Magnet 14.2 sind im Falle der gezeigten Ausführungsformen jeweils als ein elektrisch aktivierbarer Elektromagnet ausgebildet.

Der erste Magnet 14.1 und der zweite Magnet 14.2 sind hinsichtlich ihrer magnetischen Wirkungen derart begrenzt ausgelegt bzw. die erste Sperrklinke 7.1 und die zweite Sperrklinke 7.2 sind derart entfernt vom ersten Magnet 14.1 bzw. vom zweiten Magnet 14.2 angeordnet, dass in der jeweiligen Arretierungsstellung der ersten Sperrklinke 7.1 bzw. der zweiten Sperrklinke 7.2 , in welcher Arretierungsstellung die jeweilige Sperrklinke 7.1, 7.2 mit ihrem jeweiligen Kopfabschnitt 8.1, 8.2 in eine Lücke 12 des Zahnrads 10 eintaucht, die magnetische Wirkung des aktivierten ersten Magnet 14.1 bzw. des aktivierten zweiten Magnet 14.2 nicht ausreicht, die betreffende Sperrklinke 7.1, 7.2 entgegen der Wirkung der zugeordneten Spannvorrichtung 9.1, 9.2 aus der Lücke 12 des Zahnrads 10 herauszubewegen, um die Robotergelenkshaltebremse 5 freizugeben.

## Patentansprüche

1. Robotergelenkshaltebremse, aufweisend
- ein Bremsengehäuse (6),
- eine im Bremsengehäuse (6) schwenkbar gelagerte erste Sperrklinke (7.1) mit einem ersten Kopfabschnitt (8.1),
- ein im Bremsengehäuse (6) drehbar gelagertes Zahnrad (10) mit gleichmäßig über den Umfang verteilt angeordneten Zähnen (11), von denen je zwei benachbarte Zähne (11) jeweils eine Lücke (12) des Zahnrads (10) begrenzen,
- eine erste Spannvorrichtung (9.1), die ausgebildet ist, die erste Sperrklinke (7.1) gegen das Zahnrad (10) zu schwenken, derart, dass der erste Kopfabschnitt (8.1) in einer jeweiligen zugeordneten Eingriffs-Drehlage des Zahnrads (10) in eine der Lücken (12) eintaucht, um die Robotergelenkshaltebremse (5) zu arretieren,
- einen ersten Magnet (14.1), der ausgebildet ist, während seiner Aktivierung die erste Sperrklinke (7.1) entgegen der Wirkung der ersten Spannvorrichtung (9.1) außerhalb der Lücken (12) des Zahnrads (10) zu halten, um die Robotergelenkshaltebremse (5) in ihrem freigegebenen Zustand zu halten,
- eine im Bremsengehäuse (6) schwenkbar gelagerte zweite Sperrklinke (7.2) mit einem zweiten Kopfabschnitt (8.2),
- sowie eine zweite Spannvorrichtung (9.2), die ausgebildet ist, die zweite Sperrklinke (7.2) gegen das Zahnrad (10) zu schwenken, derart, dass der zweite Kopfabschnitt (8.2) in einer jeweiligen zugeordneten Eingriffs-Drehlage des Zahnrads (10) in eine der Lücken (12) eintaucht, um die Robotergelenkshaltebremse (5) zu arretieren,
**dadurch gekennzeichnet, dass** die erste Sperrklinke (7.1) und die zweite Sperrklinke (7.2) relativ zum Zahnrad (10) derart schwenkbar im Bremsengehäuse (6) gelagert sind, dass in einem arretierten Zustand der Robotergelenkshaltebremse (5) nur die eine der beiden Sperrklinken (7.1, 7.2) mit ihrem Kopfabschnitt (8.1, 8.2) in die Lücke (12) des Zahnrads (10) eintaucht und der Kopfabschnitt (8.1, 8.2) der jeweils anderen Sperrklinke (7.1, 7.2) an einer Kopffläche (11a) eines Zahnes (11) des Zahnrades (10) ansteht.

2. Robotergelenkshaltebremse nach Anspruch 1, **dadurch gekennzeichnet, dass** die erste Sperrklinke (7.1) und die zweite Sperrklinke (7.2) im Bremsengehäuse (6) derart schwenkbar gelagert angeordnet sind, dass in einem arretierten Zustand der Robotergelenkshaltebremse (5) die eine der beiden Sperrklinken (7.1, 7.2) mit ihrem Kopfabschnitt (8.1, 8.2) in die arretierende Lücke (12) des Zahnrads (10) eintaucht und der Kopfabschnitt (8.1, 8.2) der jeweils anderen Sperrklinke (7.1, 7.2) an der Kopffläche (11a) des der Lücke (12) folgenden Zahnes (11) ansteht.

3. Robotergelenkshaltebremse nach Anspruch 1 oder 2,
**dadurch gekennzeichnet, dass** der erste Kopfabschnitt (8.1) der ersten Sperrklinke (7.1) und der zweite Kopfabschnitt (8.2) der zweiten Sperrklinke (7.2) jeweils eine Stirnfläche (15.1, 15.2) aufweist, welche im arretierten Zustand der Robotergelenkshaltebremse (5) an einer in die arretierte Drehrichtung weisenden Zahnflanke (11b) eines Zahnes (11) des Zahnrades (10) ansteht.

4. Robotergelenkshaltebremse nach Anspruch 3, **dadurch gekennzeichnet, dass** die erste Sperrklinke (7.1) und die zweite Sperrklinke (7.2) im Bremsengehäuse (6) derart schwenkbar gelagert angeordnet sind, dass in einem arretierten Zustand der Robotergelenkshaltebremse (5) die eine der beiden Sperrklinken (7.1, 7.2) mit ihrer Stirnfläche (15.1, 15.2) an einer in die arretierte Drehrichtung weisenden Zahnflanke (11b) eines Zahnes (11) des Zahnrades (10) ansteht und der Kopfabschnitt (8.1, 8.2) der jeweils anderen Sperrklinke (7.1, 7.2) an der Kopffläche (11a) desselben Zahnes (11) ansteht.

5. Robotergelenkshaltebremse nach einem der Ansprüche 1 bis 4, **dadurch gekennzeichnet, dass** der erste Magnet (14.1) ausgebildet ist, während seiner Aktivierung sowohl die erste Sperrklinke (7.1) entgegen der Wirkung der ersten Spannvorrichtung (9.1) als auch die zweite Sperrklinke (7.2) entgegen der Wirkung der zweiten Spannvorrichtung (8.2) außerhalb der Lücken (12) des Zahnrads (10) zu halten, um die Robotergelenkshaltebremse (5) in ihrem freigegebenen Zustand zu halten.

6. Robotergelenkshaltebremse nach einem der Ansprüche 1 bis 4, **gekennzeichnet durch** einen zweiten Magnet (14.2), der ausgebildet ist, während seiner Aktivierung die zweite Sperrklinke (7.2) entgegen der Wirkung der zweiten Spannvorrichtung (9.2) außerhalb der Lücken (12) des Zahnrads (10) zu halten, um die Robotergelenkshaltebremse (5) in ihrem freigegebenen Zustand zu halten.

7. Robotergelenkshaltebremse nach einem der Ansprüche 1 bis 6, **dadurch gekennzeichnet, dass** der erste Magnet (14.1) und/oder der zweite Magnet (14.2) als ein elektrisch aktivierbarer Elektromagnet ausgebildet ist.

8. Robotergelenkshaltebremse nach einem der Ansprüche 1 bis 6, **dadurch gekennzeichnet, dass** der erste Magnet (14.1) und/oder der zweite Magnet (14.2) als ein mechanisch oder elektromechanisch positionsverstellbar gelagerter Permanentmagnet ausgebildet ist und der erste Magnet (14.1) bzw. der zweite Magnet (14.2) durch sein Positionsverstellen aktivierbar ist, um die erste Sperrklinke (7.1) bzw. die zweite Sperrklinke (7.2) entgegen der Wirkung der ersten Spannvorrichtung (9.1) bzw. der zweiten Spannvorrichtung (9.2) aus den Lücken (12) des Zahnrads (10) herauszuhalten.

9. Robotergelenkshaltebremse nach einem der Ansprüche 1 bis 8, **dadurch gekennzeichnet, dass** der erste Magnet (14.1) bzw. der zweite Magnet (14.2) hinsichtlich seiner magnetischen Wirkung derart begrenzt ausgelegt ist und/oder die erste Sperrklinke (7.1) bzw. die zweite Sperrklinke (7.2) derart entfernt vom ersten Magnet (14.1) bzw. vom zweiten Magnet (14.2) angeordnet ist, dass in der jeweiligen Arretierungsstellung der ersten Sperrklinke (7.1) bzw. der zweiten Sperrklinke (7.2), in welcher Arretierungsstellung die jeweilige Sperrklinke (7.1, 7.2) mit ihrem Kopfabschnitt (8.1, 8.2) in eine Lücke (12) des Zahnrads (10) eintaucht, die magnetische Wirkung des aktivierten ersten Magnet (14.1) bzw. des aktivierten zweiten Magnet (14.2) nicht ausreicht, die betreffende Sperrklinke (7.1, 7.2) entgegen der Wirkung der zugeordneten Spannvorrichtung (9.1, 9.2) aus der Lücke (12) des Zahnrads (10) herauszubewegen, um die Robotergelenkshaltebremse (5) freizugeben.

10. Robotergelenkshaltebremse nach einem der Ansprüche 1 bis 9, **dadurch gekennzeichnet, dass** der erste Magnet (14.1) bzw. der zweite Magnet (14.2) hinsichtlich seiner magnetischen Wirkung derart stark ausgelegt ist, dass die jeweils zugeordnete erste Sperrklinke (7.1) bzw. zweite Sperrklinke (7.2) in ihrer auf einer Kopffläche (11a) eines Zahnes (11) des Zahnrads (10) aufliegenden Stellung bei Aktivierung des zugeordneten ersten Magnets (14.1) bzw. zweiten Magnets (14.2) entgegen der Wirkung der ersten Spannvorrichtung (9.1) bzw. der zweiten Spannvorrichtung (9.2) außerhalb der Lücken (12) des Zahnrads (10) gehalten wird.

11. Robotergelenkshaltebremse nach einem der Ansprüche 1 bis 10, aufweisend eine Haltebremsensteuerung, die ausgebildet und eingerichtet ist, vor einem Aktivieren des ersten Magneten (14.1) bzw. des zweiten Magneten (14.2), um die betreffend zugeordnete Sperrklinke (7.1, 7.2) entgegen der Wirkung der jeweiligen Spannvorrichtung (9.1, 9.2) aus der Lücke (12) des Zahnrads (10) herauszubewegen, damit die Robotergelenkshaltebremse (5) freigeben wird, zunächst das Zahnrad (10) entgegen seiner momentanen Sperrrichtung zu drehen, um die betreffende arretierende Sperrklinke (7.1, 7.2) zu entlasten und freizugeben.

12. Roboter, aufweisend eine Robotersteuerung (3) und einen Roboterarm (2) mit mehreren durch Glieder (L1-L5) verbundenen Gelenken (J1-J4), die von Motoren (M1-M4) des Roboters (1), welche an die Gelenke (J1-J4) angekoppelt sind, gemäß eines von der Robotersteuerung (3) ausgeführten Roboterprogramms automatisiert oder in einem Handfahrbetrieb des Roboters (1) antriebsgesteuert verstellbar sind, um die Konfiguration des Roboterarms (2) zu verändern, wobei wenigstens ein Gelenk (J1-J4) des Roboterarms (2) eine Robotergelenkshaltebremse (5) gemäß einem der Ansprüche 1 bis 11 aufweisen.

## Claims

1. Robot joint holding brake, comprising
- a brake housing (6),
- a first pawl (7.1) with a first head section (8.1) mounted pivotably in the brake housing (6),
- a toothed wheel (10) mounted rotatably in the brake housing (6) with teeth (11) distributed evenly around the circumference, of which two adjacent teeth (11) define a gap (12) of the toothed wheel (10) respectively,
- a first clamping device (9.1) which is designed to pivot the first pawl (7.1) against the toothed wheel (10) such that the first head section (8.1) in a respective assigned engagement rotational position of the toothed wheel (10) dips into one of the gaps (12) in order to arrest the robot joint holding brake (5),
- a first magnet (14.1) which is designed during its activation to hold the first pawl (7.1) against the effect of the first clamping device (9.1) outside the gaps (12) of the toothed wheel (10), in order to hold the robot joint holding brake (5) in its released state,
- a second pawl (7.2) mounted pivotably in the brake housing (6) with a second head section (8.2),
- and a second clamping device (9.2) which is designed to pivot the second pawl (7.2) against the toothed wheel (10) such that the second head section (8.2) in a respective assigned engagement rotational position of the toothed wheel (10) dips into one of the gaps (12) in order to arrest the robot joint holding brake (5),
**characterised in that**
the first pawl (7.1) and the second pawl (7.2) are mounted pivotably relative to the toothed wheel (10) in the brake housing (6) such that in an arrested state of the robot joint holding brake (5) only one of the two pawls (7.1, 7.2) dips with its head section (8.1, 8.2) into the gap (12) of the toothed wheel (10) and the head section (8.1, 8.2) of the other pawl (7.1, 7.2) bears on a head surface (11a) of a tooth (11) of the toothed wheel (10).

2. Robot joint holding brake according to claim 1, **characterised in that** the first pawl (7.1) and the second pawl (7.2) are mounted pivotably in the brake housing (6) such that in an arrested state of the robot joint holding brake (5) one of the two pawls (7.1, 7.2) dips with its head section (8.1, 8.2) into the arresting gap (12) of the toothed wheel (10) and the head section (8.1, 8.2) of the other respective pawl (7.1, 7.2) bears on the head surface (11a) of the tooth (11) following the gap (12).

3. Robot joint holding brake according to claim 1 or 2, **characterised in that** the first head section (8.1) of the first pawl (7.1) and the second head section (8.2) of the second pawl (7.2) each have an end face (15.1, 15.2), which in the arrested state of the robot joint holding brake (5) bears on a tooth flank (11b) of a tooth (11) of the toothed wheel (10) pointing in the arrested direction of rotation.

4. Robot joint holding brake according to claim 3, **characterised in that** the first pawl (7.1) and the second pawl (7.2) are arranged pivotably in the brake housing (6) such that in an arrested state of the robot joint holding brake (5) one of the two pawls (7.1, 7.2) with its end face (15.1, 15.2) bears on a tooth flank (11b) of a tooth (11) of the toothed wheel (10) pointing in the arrested direction of rotation and the head section (8.1, 8.2) of the other pawl (7.1, 7.2) bears on the head surface (11a) of the same tooth (11).

5. Robot joint holding brake according to any of claims 1 to 4, **characterised in that** the first magnet (14.1) is designed during its activation to hold both the first pawl (7.1) against the effect of the first clamping device (9.1) and also the second pawl (7.2) against the effect of the second clamping device (8.2) outside the gaps (12) of the toothed wheel (10), in order to hold the robot joint holding brake (5) in its released state.

6. Robot joint holding brake according to any of claims 1 to 4, **characterised by** a second magnet (14.2) which is designed during its activation to hold the second pawl (7.2) against the effect of the second clamping device (9.2) outside the gaps (12) of the toothed wheel (10), in order to hold the robot joint holding brake (5) in its released state.

7. Robot joint holding brake according to any of claims 1 to 6, **characterised in that** the first magnet (14.1) and/or the second magnet (14.2) is designed as an electrically activated electromagnet.

8. Robot joint holding brake according to any of claims 1 to 6, **characterised in that** the first magnet (14.1) and/or the second magnet (14.2) is designed as a permanent magnet which is mounted to be adjustable in position mechanically or electromechanically and the first magnet (14.1) or the second magnet (14.2) can be activated by adjusting its position, in order to keep the first pawl (7.1) or the second pawl (7.2) against the effect of the first clamping device (9.1) or the second clamping device (9.2) out of the gaps (12) of the toothed wheel (10).

9. Robot joint holding brake according to any of claims 1 to 8, **characterised in that** the first magnet (14.1) or the second magnet (14.2) is designed to be limited with regard to its magnetic effect and/or the first pawl (7.1) or the second pawl (7.2) is arranged so far from the first magnet (14.1) or from the second magnet (14.2) that in the respective arresting position of the first pawl (7.1) or the second pawl (7.2), in which arresting position the respective pawl (7.1, 7.2) dips with its head section (8.1, 8.2) into a gap (12) of the toothed wheel (10), the magnetic effect of the activated first magnet (14.1) or the activated second magnet (14.2) is not sufficient to move the relevant pawl (7.1, 7.2) against the effect of the assigned clamping device (9.1, 9.2) out of the gap (12) of the toothed wheel (10) in order to release the robot joint holding brake (5).

10. Robot joint holding brake according to any of claims 1 to 9, **characterised in that** the first magnet (14.1) or the second magnet (14.2) is designed to be strong with respect to its magnetic effect such that the respectively assigned first pawl (7.1) or second pawl (7.2) in its position bearing on a head surface (11a) of a tooth (11) of the toothed wheel (10) when activating the assigned first magnet (14.1) or second magnet (14.2) is held outside the gaps (12) of the toothed wheel (10) against the effect of the first clamping device (9.1) or the second clamping device (9.2).

11. Robot joint holding brake according to any of claims 1 to 10, having a holding brake control, which is designed and configured, before activating the first magnet (14.1) or the second magnet (14.2), to move the relevant assigned pawl (7.1, 7.2) against the effect of the respective clamping device (9.1, 9.2) out of the gap (12) of the toothed wheel (10), so that the robot joint holding brake (5) is released, firstly to rotate the toothed wheel (10) against its current locking direction, in order to relieve and release the relevant arresting pawl (7.1, 7.2).

12. Robot, having a robot controller (3) and a robot arm (2) with a plurality of joints (J1-J4) connected by links (L1-L5), which joints are adjustable by automation or controlled by drives during a hand operation of the robot (1) by motors (M1-M4) of the robot (1) which are coupled to the joints (J1-J4) according to a robot program executed by the robot controller (3) in order to change the configuration of the robot arm (2), wherein at least one joint (J1-J4) of the robot arm (2) has a robot joint holding brake (5) according to any of claims 1 to 11.

## Revendications

1. Frein de maintien d'articulation de robot présentant
- un boîtier de frein (6),
- un premier cliquet (7.1) monté pivotant dans le boîtier de frein (6) et comportant une première section de tête (8.1),
- une roue dentée (10) qui est montée rotative dans le boîtier de frein (6) et présente des dents (11) qui sont agencées de manière uniformément répartie sur la périphérie, dont deux dents adjacentes (11) définissent chacune un interstice (12) de la roue dentée (10),
- un premier dispositif de serrage (9, 1) qui est réalisé pour faire pivoter le premier cliquet (7, 1) contre la roue dentée (10) de telle sorte que la première section de tête (8, 1), dans une position de rotation d'engagement associée respective de la roue dentée (10), plonge dans l'un des interstices (12) pour bloquer le frein de maintien de l'articulation du robot (5),
- un premier aimant (14.1) qui est réalisé pour maintenir, pendant son activation, le premier cliquet (7.1) contre l'effet du premier dispositif de serrage (9, 1) en dehors des interstices (12) de la roue dentée (10) afin que le frein de maintien de l'articulation de robot (5) soit maintenu dans son état desserré,
- un deuxième cliquet (7.2) monté pivotant dans le boîtier de frein (6) et comportant une deuxième section de tête (8.2),
- ainsi qu'un deuxième dispositif de serrage (9.2) qui est réalisé pour faire pivoter le deuxième cliquet (7.2) contre la roue dentée (10) de telle sorte que la deuxième section de tête (8.2), dans une position de rotation d'engagement associée respective de la roue dentée (10), plonge dans un des interstices (12) pour bloquer le frein de maintien de l'articulation de robot (5),
**caractérisé en ce que**
le premier cliquet (7.1) et le deuxième cliquet (7.2) sont montés dans le boîtier de frein (6) de manière pivotante par rapport à la roue dentée (10) de telle sorte que dans un état bloqué du frein de maintien de l'articulation de robot (5), un seul des deux cliquets (7.1, 7.2) avec sa section de tête (8.1, 8.2) plonge dans l'interstice (12) de la roue dentée (10) et la section de tête (8.1, 8.2) de l'autre cliquet (7.1, 7.2) respectif est en appui sur une surface de tête (11a) d'une dent (11) de la roue dentée (10).

2. Frein de maintien d'articulation de robot selon la revendication 1, **caractérisé en ce que** le premier cliquet (7.1) et le deuxième cliquet (7.2) sont agencés de manière pivotante dans le boîtier de frein (6) de telle sorte que, dans un état bloqué du frein de maintien d'articulation de robot (5), ledit un des deux cliquets (7.1, 7. 2) est monté avec sa section de tête (8.1, 8.2) dans l'interstice de blocage (12) de la roue dentée (10), et la section de tête (8.1, 8.2) de l'autre cliquet (7.1, 7.2) respectif est en appui sur la surface de tête (11a) de la dent (11) consécutive à cet interstice (12).

3. Frein de maintien d'articulation de robot selon la revendication 1 ou 2, **caractérisé en ce que** la première section de tête (8.1) du premier cliquet (7.1) et la deuxième section de tête (8.2) du deuxième cliquet (7.2) présentent chacune une face frontale (15,1, 15.2) qui, dans l'état bloqué du frein de maintien de l'articulation de robot (5), est en appui sur un flanc de dent (11 b) d'une dent (11) de la roue dentée (10), qui est dirigé dans le sens de rotation bloqué.

4. Frein de maintien d'articulation de robot selon la revendication 3, **caractérisé en ce que** le premier cliquet (7.1) et le deuxième cliquet (7.2) sont montés pivotants dans le boîtier de frein (6) de telle sorte que, dans un état bloqué du frein de maintien d'articulation de robot (5), l'un des deux cliquets (7.1, 7.2) est en appui, avec sa face frontale (15.1, 15.2), sur un flanc de dent (11b) d'une dent (11) de la roue dentée (10), qui est dirigé dans le sens de rotation bloqué, et la section de tête (8.1, 8.2) de l'autre cliquet (7.1, 7.2) respectif est en appui sur la surface de tête (11a) de la même dent (11).

5. Frein de maintien d'articulation de robot selon l'une des revendications 1 à 4, **caractérisé en ce que** le premier aimant (14.1) est réalisé pour maintenir, pendant son activation, tant le premier cliquet (7.1) contre l'effet du premier cliquet (7.1) que le deuxième cliquet (7.2) contre l'effet du deuxième dispositif de serrage (9.2) en dehors des interstices (12) de la roue dentée (10) pour maintenir le frein de maintien de l'articulation du robot (5) dans son état desserré.

6. Frein de maintien de poignet de robot selon l'une quelconque des revendications 1 à 4, **caractérisé par** un deuxième aimant (14.2) qui est réalisé pour maintenir, pendant son activation, le deuxième cliquet (7, 2) contre l'effet du deuxième dispositif de serrage (9.2) en dehors des interstices (12) de la roue dentée (10) pour maintenir le frein de maintien de l'articulation de robot (5) dans son état desserré.

7. Frein de maintien d'articulation de robot selon l'une quelconque des revendications 1 à 6, **caractérisé en ce que** le premier aimant (14.1) et/ou le deuxième aimant (14. 2) est réalisé sous la forme d'un électroaimant électriquement actionnable.

8. Frein de maintien d'articulation de robot selon l'une des revendications 1 à 6, **caractérisé en ce que** le premier aimant (14.1) et/ou le deuxième aimant (14.2) est réalisé sous la forme d'un aimant permanent qui est monté de façon à pouvoir être mécaniquement ou électromécaniquement réglé en position, et le premier aimant (14.1) ou le deuxième aimant (14.2), respectivement, peut être activé par le réglage de sa position pour retenir le premier cliquet (7.1) ou le deuxième cliquet (7.2), respectivement, hors des interstices (12)de la roue dentée (10) à l'encontre de l'effet du premier dispositif de serrage (9.1) ou du deuxième dispositif de serrage (9.2), respectivement.

9. Frein de maintien d'articulation de robot selon l'une des revendications 1 à 8, **caractérisé en ce que** le premier aimant (14 .1) ou le deuxième aimant (14.2), respectivement, est conçu de manière limitée du point de vue de son effet magnétique, et/ou le premier cliquet (7.1) ou le deuxième cliquet (7. 2), respectivement, est agencé à distance du premier aimant (14.1) ou du deuxième aimant (14. 2), respectivement, de telle sorte que dans la position de blocage respective du premier cliquet (7.1) ou du deuxième cliquet (7.2), position de blocage dans laquelle le cliquet (7.1, 7. 2) respectif plonge avec sa section de tête (8.1, 8.2) dans un interstice (12) de la roue dentée (10), l'effet magnétique du premier aimant activé (14.1) ou du deuxième aimant activé (14.2), respectivement, n'est pas suffisant pour faire sortir le cliquet (7.1, 7.2) concerné de l'interstice (12) de la roue dentée (10) contre l'effet du dispositif de serrage (9.1, 9.2) associé afin de desserrer le frein de maintien d'articulation de robot (5).

10. Frein de maintien d'articulation de robot selon l'une des revendications 1 à 9, **caractérisé en ce que** le premier aimant (14.1) ou le deuxième aimant (14.2), respectivement, est conçu de manière si forte du point de vue de son effet magnétique que le premier cliquet (7.1) ou le deuxième cliquet (7.2) respectivement associé est maintenu dans sa position reposant sur une surface de tête (11a) d'une dent (11) de la roue dentée (10), lorsque le premier aimant (14.1) ou le deuxième aimant (14.2) associé est activé contre l'effet du premier dispositif de serrage (9.1) ou du deuxième dispositif de serrage (9.2), respectivement, en dehors des interstices (12) de la roue dentée (10).

11. Frein de maintien d'articulation de robot selon l'une des revendications 1 à 10, présentant une commande de frein de maintien qui est réalisée et agencée pour faire sortir, avant une activation du premier aimant (14.1) ou du deuxième aimant (14. 2), respectivement, le cliquet (7.1, 7.2) associé de manière correspondante contre l'effet du dispositif de serrage (9.1, 9.2) respectif hors de l'interstice (12) de la roue dentée (10) afin que le frein de maintien de l'articulation de robot (5) soit desserré, en faisant tout d'abord tourner la roue dentée (10) à l'encontre de son sens de blocage momentané pour relâcher et desserrer le cliquet (7.1, 7.2) de blocage correspondant.

12. Robot présentant une commande de robot (3) et un bras de robot (2) avec une pluralité d'articulations (JI-J4) reliées par des membres (LI-L5), qui sont réglables par des moteurs (M1-M4) du robot (1), lesquels sont accouplés aux articulations (J1-J4), réglables de manière automatisée ou motorisés par commande manuelle du robot (1) selon un programme de robot réalisé par la commande de robot (3), pour modifier la configuration du bras du robot (2), au moins une articulation (JI-J4) du bras du robot (2) présentant un frein de maintien d'articulation du robot (5) selon une des revendications 1 à 11.
